# EUROPEAN PATENT APPLICATION

(11) **EP 1 923 983 A1**
(43) Date of publication of application: **21.05.2008**
(21) Application number: 06782283.3
(22) Date of filing: 03.08.2006
(51) Int. Cl.: H02K 23/04, H02K 1/17, H02K 15/03, H02K 23/66

(54) **ANISOTROPIC BOND MAGNET AND DC MOTOR EMPLOYING IT**

(30) Priority: 08.08.2005 JP 2005230177; 11.10.2005 JP 2005297013
(71) Applicant: Aichi Steel Corporation, Aichi 476-8666 (JP)
(72) Inventor: HONKURA, Yoshinobu, Tokai-shi, Aichi 4768666 (JP); MITARAI, Hironari, Tokai-shi Aichi 4768666 (JP); MATSUOKA, Hiroshi, Tokai-shi Aichi 4768666 (JP); HASHIMOTO, Yoji, Tokai-shi Aichi 4768666 (JP)
(74) Representative: TBK-Patent
(86) International application number: PCT/JP2006/315423
(87) International publication number: WO 2007/018128

(57) **Abstract**

The rectifying characteristic of a brush-equipped direct current machine is improved, and the life of the machine is extended.

As illustrated in Fig. 2, a magnetic flux density reduced portion in which the magnetic flux density is reduced is formed in a magnetic pole section of an anisotropic bonded magnet. The position in the magnetic pole section formed with the magnetic flux density reduced portion is formed at the position at which, when a rectifier coil moves in a rectification section, the absolute value of the density of a magnetic flux penetrating the rectifier coil is increased due to the influence of the magnetic flux density reduced portion. Thus, an inverse voltage can be induced in the rectifier coil in the direction of inversion current during a rectification period. It is therefore possible to facilitate the inversion of the current, and to compensate for inadequate rectification and improve the rectifying characteristic. Accordingly, the occurrence of sparks at the end of the rectification can be prevented.

## Description

### Technical Field

Conventionally, in a brush-equipped direct current motor, a variety of techniques for improving the rectifying characteristic have been developed. Rectification refers to that an armature coil of a motor connected to commutator segments short-circuited by a brush (hereinafter referred to as the "rectifier coil") inverts the direction of current flowing through the rectifier coil in a movement section of a rear end portion at a rear position in the rotation direction of the rectifier coil which moves during a period from the short circuit of the commutator segments until the cancellation of the short circuit (the section and the period will be hereinafter referred to as the "rectification section" and the "rectification period"). A phenomenon in which normal inversion current does not flow near the end of the rectification is referred to as inadequate rectification. At the moment the commutator segments are released from the contact with the brush, a gap formed therebetween is applied with a high voltage due to back electromotive force caused by inductance. As a result, a rapid current flow occurs, and sparks are generated. The sparks constitute a cause for shortening the life of the commutators and the brush.

A technique for correcting the inadequate rectification has been known which varies the magnetic flux density distribution of a magnet to vary a magnetic flux penetrating the rectifier coil during the rectification period and induce a voltage in the rectifier coil in the direction of the inversion current during the rectification, to thereby offset the voltage caused by the inductance of the rectifier coil. Such an idea was theoretically established around 1984 as rectification control (for handing sparks) and has been put into practical use by 1990.

In recent years, in the brush-equipped direct current motor, the techniques described in the following Patent Documents 1 to 4, for example, have been known.
According to Patent Document 1, in a conventional two-pole direct current motor using two tile-like magnets and having no magnetic pole in the vicinity of a mechanical neutral axis, an extended portion formed by a magnet having the same polarity to the polarity of a main magnetic pole and a gradually increasing magnetic flux density is provided to extend in the direction of the mechanical neutral axis from a front end portion of the corresponding magnet in the rotation direction of an armature. Due to this configuration, a magnetic flux penetrating a rectifier coil is increased during the movement of the rectifier coil in a rectification section, and thus a voltage is generated in the direction of inversion current to compensate for inadequate rectification.

The following Patent Document 2 discloses that, in the motor according to Patent Document 1, the occurrence of sparks is suppressed through the adjustment of the positions of brushes such that the ratio of the position of the angle of the rectifier coil at the start of rectification with respect to the position of a magnetic flux minimized portion formed at the border between the main magnetic pole and the extended portion to the angle of a commutator falls within a predetermined range.

According to the following Patent Document 3, in a conventional two-pole direct current motor using two tile-like magnets and having no magnetic pole in the vicinity of a mechanical neutral axis, an end magnetic pole formed by a magnet having the same polarity to the polarity of a main magnetic pole (the magnetic pole on the near side) which generates a magnetic flux penetrating a rectifier coil is provided to extend, in the opposite direction to the rotation direction and in the direction of the mechanical neutral axis, from a rear end portion at the opposite position to the rotation direction of the magnetic pole subsequent in the rotation direction of an armature. Due to this configuration, with the positions of brushes adjusted such that a front end portion of the rectifier coil (a leading end coil portion in the rotation direction) has a rectification section extending from the vicinity of the mechanical neutral axis having no magnetic pole to the center of the end magnetic pole, the magnetic flux penetrating the rectifier coil is increased during the movement of the rectifier coil in the rectification section, and thus back electromotive force is generated in the direction of inversion current to compensate for inadequate rectification.

In contrast to Patent Document 3, according to the following Patent Document 4, an end magnetic pole of the opposite polarity is provided to extend in the direction of a mechanical neutral axis from a front end portion of a main magnetic pole in the rotation direction, and the positions of brushes are adjusted to set the rectification section as a section extending from the center of the end magnetic pole to the center of the end magnetic pole in front of the next magnetic pole. Further, the patent document discloses that a magnetic flux penetrating a rectifier coil is reduced in the former half of the rectification section and increased in the latter half of the rectification section, to thereby prevent excessive rectification and inadequate rectification.

Patent Document 1: Japanese Unexamined Patent Application Publication No. 2001-095218
Patent Document 2: Japanese Unexamined Patent Application Publication No. 2002-084719
Patent Document 3: Japanese Unexamined Patent Application Publication No. 2002-095229
Patent Document 4: Japanese Unexamined Patent Application Publication No. 2002-095230

### Disclosure of Invention

### Problems to be Solved by the Invention

Meanwhile, in recent years, there has been an increasing demand for easy assemblability of a direct current motor and a direct current electric generator and a reduction in cogging torque. Thus, it has been demanded to improve the rectifying characteristic and reduce the cogging torque while maintaining device specifications such as the output torque to a level equal to or higher than the level of the conventional techniques. To meet the demand, it is advantageous to use an anisotropic ring magnet formed with the omission of a magnet adhesion process, unlike the above-described techniques.

The application of the conventional techniques to the ring-shaped anisotropic magnet, however, involves the following problems.
All of the above-described Patent Documents 1 to 4 take advantage of the absence of a magnet in the vicinity of the mechanical neutral axis and provide the auxiliary magnetic pole in the region. The ring magnet, however, is continuously formed with the magnetic pole on the circumference thereof. Thus, there is no space in which the above-described auxiliary magnetic pole can be formed. Therefore, the techniques of the above-described Patent Documents 1 to 4 cannot be applied to a ring-shaped anisotropic bonded magnet.

Further, in consideration of the processing accuracy and the component strength, it is difficult to form a thin ring-shaped anisotropic bonded magnet by machining the magnet into a shape having a thick portion or a missing portion as in Patent Documents 1 to 4.

Furthermore, in recent years, there has been an increasing demand for reduction in size and weight of the direct current motor. To sufficiently achieve the reduction in size and weight while maintaining the device specifications such as the output torque to the level equal to or higher than the level of the conventional techniques, it is advantageous to use, as an exciting magnet, a ring-shaped high-quality anisotropic rare earth bonded magnet having a reduced thickness.

The present invention has been made to solve the above-described problems. An object of the present invention is to achieve an anisotropic bonded magnet which improves the rectifying characteristic in a direct current motor to suppress the occurrence of sparks in the direct current motor using the magnet and extend the life of the motor.
Further, another object of the present invention is to reduce the cogging torque.

### Means for Solving the Problems

To solve the above-described problems, the following means are effective.
The first invention is an anisotropic bonded magnet molded into a ring shape to be used to excite a brush-equipped direct current motor, the anisotropic bonded magnet characterized by including, in magnetic pole sections of the ring shape, magnetic flux density reduced portions in which the magnetic flux density of a component in the direction of the normal of the ring shape is partially reduced.
The present invention is characterized in that the ring magnet having a constant thickness includes, in the magnetic pole sections, the magnetic flux density reduced portions in which the magnetic flux density is partially reduced. Due to the formation of the magnetic flux density reduced portions, the rectifying characteristic of the direct current motor can be improved. The magnetic flux density reduced portions are formed solely by magnetic alignment and magnetization without machining of the ring magnet. Thus, the manufacture is simplified. Further, the magnetic flux density reduced portions are not thinly formed. Thus, demagnetization due to a demagnetizing field can be prevented. It is desired to form the magnetic flux density reduced portions of the number corresponding to the number of rectifier coils. Each of the magnetic flux density reduced portions can be formed at least in the magnetic pole section at a position corresponding to a rectification section constituting a region in which a rear end portion of the corresponding rectifier coil moves during rectification.

The second invention is an anisotropic bonded magnet molded into a ring shape to be used to excite a brush-equipped direct current motor, the anisotropic bonded magnet characterized in that a magnetic flux density distribution in each of magnetic pole sections of the ring shape forms an asymmetric distribution which includes a magnetic flux density reduced portion wherein the absolute value rises from a neutral axis opposite to the rotation direction of an armature with a delay with respect to the rotation direction of the armature, and in which the absolute value falls more rapidly than the rise thereof in the rotation direction of the armature with respect to a neutral axis in the rotation direction of the armature.
That is, the invention is characterized in that the magnetic flux density distribution of the ring magnet is made asymmetric, and that the magnetic flux density reduced portion is provided in the section in which the rise of the magnetic flux density from the neutral axis opposite to the rotation direction of the armature is delayed.

The third invention is the anisotropic bonded magnet described in either one of Claims 1 and 2, characterized in that the magnetic flux density reduced portion includes a magnetic flux density minimized portion in which the distribution of the magnetic flux density of a component in the direction of the normal of the ring shape is minimized with respect to a variation in position in the rotative direction of the ring shape.
The present invention is characterized in that the magnetic flux density reduced portion includes the magnetic flux density minimized portion. Due to this configuration, the rectifying characteristic can be improved.

The fourth invention is the anisotropic bonded magnet described in any one of Claims 1 to 3, characterized in that the magnetic alignment of the magnetic flux density reduced portion mainly includes a component aligned in magnetic field in the rotative direction of the ring magnet.
The present invention realizes the magnetic flux density reduced portion through the magnetic alignment of the bonded magnet. As the magnetic alignment for a main magnetic pole portion excluding the magnetic flux density reduced portion, arbitrary magnetic alignment necessary for generating in the armature a magnetic flux penetrating the magnetic flux, such as radial magnetic alignment, polar magnetic alignment, semi-radial magnetic alignment, and axial magnetic alignment, can be used. Due to this configuration, a magnetized component in the direction of the normal is reduced in the magnetic flux density reduced portion due to the magnetization performed after the magnetic alignment process. Therefore, the magnetic flux density reduced portion can be realized.

The fifth invention is the anisotropic bonded magnet described in any one of Claims 1 to 4, characterized in that the magnetic alignment of the magnetic flux density reduced portion has a distribution in which, with respect to a variation in position in the rotative direction of the ring magnet, the magnetic flux density reduced portion is gradually aligned in magnetic field from the direction of the normal to the rotative direction and then gradually to the direction of the normal.
Due to the magnetization performed after the above-described magnetic alignment process, it is possible to form the magnetic flux density reduced portion in which the magnetized component in the direction of the normal is reduced. Further, due to the above configuration, the magnetic flux density minimized portion can be specifically formed in the magnetic flux density reduced portion.

The sixth invention is the anisotropic bonded magnet described in any one of Claims 1 to 5, characterized in that the position in the magnetic pole section formed with the magnetic flux density reduced portion is formed at the position at which, when a rectifier coil moves in a rectification section, the absolute value of the density of a magnetic flux penetrating the rectifier coil is increased due to the influence of the magnetic flux density reduced portion.

The present invention is characterized in the relative positional relationship between the rectifier coil and the magnetic flux density reduced portion. When the above-described positional relationship is established, the magnetic flux density is increased along with the movement of the rectifier coil. Thus, a voltage (induced electromotive force generated by the rotation of the armature) can be generated in the direction of inversion current. Accordingly, the rectification can be facilitated. The relationship between the rectifier coil and the magnetic flux density reduced portion for satisfying the above condition is typically the positional relationship in which the magnetic flux from the entirety of the magnetic flux density reduced portion and the magnetic flux from the magnetic pole including the magnetic flux density reduced portion penetrate the rectifier coil at the start of the rectification, and in which the magnetic flux from the magnetic flux density reduced portion stops penetrating the rectifier coil and only the magnetic flux from the magnetic pole to which the magnetic flux density reduced portion belongs penetrates the rectifier coil at the end of the rectification. That is, the magnetic flux density reduced portion is typically located in the section extending from the position of the rear end portion of the rectifier coil (a coil portion at a rear end when the rotation direction of the armature is defined as the front direction) at the start of the rectification (since the magnetic flux penetrating the rectifier coil determines the electromagnetic characteristic, the position of the coil portion is defined by the position of a rear end edge of teeth wound with the coil portion and guiding the magnetic flux) to the position of the rear end portion of the rectifier coil at the end of the rectification, i.e., the rectification section. Meanwhile, during the movement of the rectifier coil in the rectification section, the position of a front end portion (a coil portion at a front end when the rotation direction of the armature is defined as the front direction) (the position is defined by the position of a front end edge of teeth wound with the coil portion) is included in the same magnetic pole.

To satisfy the above-described relationship, the magnetic flux density reduced portion is formed in the magnetic pole section. In this case, the entire magnetic flux penetrating the rectifier coil can be increased during the movement of the rectifier coil in the rectification section. In this relationship, unlike the above-described Patent Documents 1 and 2, the rear end portion of the rectifier coil passes the magnetic flux density reduced portion when the rectifier coil moves in the rectification section. When the magnetic flux density reduced portion has the minimized value, a magnetic flux decreasing region and a magnetic flux increasing region both contribute to the increase in the entire magnetic flux penetrating the rectifier coil along the rotation direction of the armature in the magnetic flux density reduced portion. It is therefore possible to increase the increase rate of the magnetic flux with respect to the rotational angle, and to favorably improve the rectifying characteristic.

Further, the magnetic flux density reduced portion is configured by the magnetic flux density distribution which rises with a delay with respect to the rotational angle of the armature. In the rectification period, therefore, the density of the magnetic flux penetrating the rectifier coil in the magnetic flux density reduced portion is substantially increased from a small value close to the value on the neutral axis to a value close to a saturated steady-state value. Thus, the entire magnetic flux penetrating the rectifier coil is varied to be substantially increased in the rectification period. It is therefore possible to effectively compensate for the inadequate rectification, and to effectively prevent the occurrence of sparks. Further, the magnetic flux density reduced portion averagely alleviates the variation of the magnetic flux density in the vicinity of the neutral axis of the magnetic pole. Therefore, the cogging torque is substantially reduced.

Further, the rectifier coil may be used in a positional relationship in which the rectifier coil is included in the same magnetic pole in the rectification section, and in which the front end portion of the rectifier coil is located at the minimized position in the magnetic flux density reduced portion at the start of the rectification and the rectifier coil is located at a position including the magnetic flux density reduced portion at the end of the rectification.
Further, the rectifier coil may be used in a configuration in which the rectifier coil is included in the same magnetic pole in the rectification section, in which the rectifier coil includes the entirety of the magnetic flux density reduced portion at the start of the rectification and the rear end portion of the rectifier coil is located at a position in the vicinity of the minimized position in the magnetic flux density reduced portion at the end of the rectification, and in which the front end portion of the rectifier coil is included in the same magnetic pole section during the rectification period.
Further, the position in the magnetic pole section formed with the magnetic flux density reduced portion may be formed at the position at which the rectifier coil is included in the same magnetic pole in the rectification section, and at which, when the rectifier coil moves in the rectification section, a shift occurs from the position at which the rectifier coil penetrates at least a predetermined portion of the magnetic flux of the magnetic flux density reduced portion to the position at which the rectifier coil does not penetrate the predetermined magnetic flux.
Further, the position in the magnetic pole section formed with the magnetic flux density reduced portion may be formed at the position at which the rectifier coil is included in the same magnetic pole in the rectification section, and at which, when the rectifier coil moves in the rectification section, the rear end portion of the rectifier coil located rearward in the rotation direction passes the magnetic flux density reduced portion.
In the above-described case, the magnetic flux penetrating the rectifier coil is increased during the period in which the rectifier coil moves in the rectification section. Accordingly, it is possible to induce a voltage in the rectifier coil in the direction of inversion current during the rectification period, and to improve the rectifying characteristic.

The seventh invention is the anisotropic bonded magnet described in any one of Claims 1 to 6, characterized in that, in a magnetized region including in each of the magnetic pole sections at least a half or more of an magnetic alignment transition section which has an magnetic alignment distribution gradually aligned in magnetic field from the direction of the normal to the rotative direction and then gradually to the direction of the normal with respect to a variation in position in the rotative direction of the ring magnet, a region including at least the median line of the magnetic alignment transition section constitutes the magnetic flux density reduced portion.
When unidirectional magnetization is performed in a magnetic pole section after the provision of the above-described magnetic alignment transition section, the magnetic flux density reduced portion can be formed. The magnetic alignment transmission section may be completely included in a magnetic pole section. Alternatively, a region extending from an end of the magnetic alignment transmission section and not crossing the median line (the median line on the region of the magnetic alignment distribution aligned in magnetic field in the rotative direction, not necessarily referring to a geometrical median line) of the magnetic alignment transmission section may be included in another adjacent magnetic pole section. That is, the magnetization may be performed such that, in the positional relationship in which the position of the median point (the median line) of the section having the magnetic alignment aligned in magnetic field in the rotative direction is included in a magnetic pole section, a region smaller than the remaining half is included in another adjacent magnetic pole section. With this configuration, the magnetic flux density reduced portions according to the above-described Claims 1 to 6 can be formed.

The eighth invention is a brush-equipped direct current motor including the anisotropic bonded magnet described in any one of Claims 1 to 7. Also in this case, the entire magnetic flux penetrating the rectifier coil which moves in the rectification section is increased, and a voltage is induced in the rectifier coil in the direction of inversion current. Accordingly, the occurrence of sparks can be suppressed. Further, the cogging torque can be reduced.

In all of the above-described inventions, the characteristic of the magnetic flux density reduced portion is the variation characteristic of the magnetic flux density sensed together with the rotation by given teeth when the anisotropic bonded magnet is installed to a motor and the armature is rotated. That is, the characteristic forms the magnetic flux density distribution contributing to the generation of actual torque in the motor. The distribution characteristic of the magnetic flux density reduced portion, therefore, is not a characteristic obtained by the measurement of a surface magnetic flux density in the anisotropic bonded magnet as a single item without the provision of the armature. A method of the measurement will be later described.

### Advantages

According to the present invention, a ring magnet having a constant thickness includes, in magnetic pole sections, magnetic flux density reduced portions in which the magnetic flux density is partially reduced. It is therefore possible to increase the absolute value of a magnetic flux penetrating a rectifier coil, and to induce a voltage in the direction of inversion current. As a result, it is possible to facilitate the inversion of current in the rectifier coil, to compensate for inadequate rectification and improve the rectifying characteristic of a brush-equipped direct current motor, and to effectively suppress the occurrence of sparks between commutators and the brushes. Further, the magnetic flux density reduced portions are formed solely by magnetic alignment and magnetization, without machining of the ring magnet. Thus, the manufacture is simplified. Furthermore, the magnetic flux density reduced portions are not thinly configured. Thus, demagnetization due to a demagnetizing field can be prevented.

According to the second invention, a magnetic flux density distribution in each of magnetic pole sections of a ring shape forms an asymmetric distribution which includes a magnetic flux density reduced portion wherein the absolute value rises from a neutral axis opposite to the rotation direction of an armature with a delay with respect to the rotation direction of the armature, and in which the absolute value falls more rapidly than the rise thereof in the rotation direction of the armature with respect to a neutral axis in the rotation direction of the armature. It is therefore possible to substantially increase the absolute value of a magnetic flux penetrating a rectifier coil, and to induce a large voltage in the direction of inversion current. As a result, it is possible to facilitate the inversion of current in the rectifier coil, to compensate for inadequate rectification and improve the rectifying characteristic of a brush-equipped direct current motor, and to effectively suppress the occurrence of sparks between commutators and the brushes. Further, the invention includes the magnetic flux density reduced portion which delays and alleviates the rise of the magnetic flux density from the neutral axis. Thus, the cogging torque can be more effectively reduced than in a case using a ring magnet not formed with the magnetic flux density reduced portion. Further, the invention exerts similar effects to the effects of Claim 1.

According to the third invention, the magnetic flux density reduced portion includes a magnetic flux density minimized portion in which the magnetic flux density is minimized. Therefore, the rectifying characteristic can be effectively improved.

According to the fourth invention, the magnetic alignment of the magnetic flux density reduced portion mainly includes a component aligned in magnetic field in the rotative direction of the ring magnet. In the magnetic flux density reduced portion, therefore, a magnetized component in the direction of the normal can be reduced by magnetization performed after an magnetic alignment process. Thus, the magnetic alignment and the magnetization can be sufficiently performed. As a result, demagnetization due to an armature reaction magnetic flux can be prevented. This is due to the magnetic alignment mainly in the rotative direction, which makes the magnetic alignment direction perpendicular to the armature reaction magnetic flux and prevents the demagnetizing action.

According to the fifth invention, the magnetic alignment of the magnetic flux density reduced portion has a distribution in which, with respect to a variation in position in the rotative direction of the ring magnet, the magnetic flux density reduced portion is gradually aligned in magnetic field from the direction of the normal to the rotative direction and then gradually to the direction of the normal. It is therefore possible to effectively form the magnetic flux density reduced portion in which the magnetized component in the direction of the normal is reduced. Further, due to this configuration, the magnetic flux density minimized portion can be specifically formed in the magnetic flux density reduced portion.

According to the sixth invention, the position in the magnetic pole section formed with the magnetic flux density reduced portion is formed at the position at which, when a rectifier coil moves in a rectification section, the absolute value of the density of a magnetic flux penetrating the rectifier coil is increased due to the influence of the magnetic flux density reduced portion. It is therefore possible to induce a voltage in the rectifier coil in the direction of inversion current during the rectification period, and to facilitate the inversion of current to compensate for inadequate rectification and improve the rectifying characteristic. Accordingly, the occurrence of sparks at the end of the rectification can be prevented. Further, the cogging torque can be reduced more than in a case using a ring magnet not formed with the magnetic flux density reduced portion.

According to the seventh invention, in a magnetized region including at least a half or more of an magnetic alignment transition section in each of the magnetic pole sections, a region including at least the median line of the magnetic alignment transition section constitutes the magnetic flux density reduced portion. Accordingly, the magnetic flux density reduced portion having a magnetic flux density distribution of a desired purpose can be easily formed in the magnetic pole section.

The eighth invention is a brush-equipped direct current motor including the anisotropic bonded magnet of the above-described configuration. It is therefore possible to suppress the occurrence of sparks, and thus to extend the life of the motor. Further, it is possible to reduce the cogging torque.

### Brief Description of Drawings

[Fig. 1] Fig. 1 is a cross-sectional view illustrating a schematic configuration of a DC brush motor 20 according to Embodiment 1.
[Fig. 2] Fig. 2 is an explanatory diagram illustrating the relationship between the positions of teeth, commutators, a brush, and a rectifier coil in the motor according to Embodiment 1, a surface magnetic flux density distribution of an anisotropic bonded magnet, a magnetic flux penetrating the commutators, a voltage induced in the commutators, a distribution of a magnetization vector of the anisotropic bonded magnet, and an magnetic alignment distribution of the anisotropic bonded magnet.
[Fig. 3] Fig. 3 is an explanatory diagram illustrating an magnetic alignment distribution of the anisotropic bonded magnet after magnetic alignment molding.
[Fig. 4] Fig. 4 is an explanatory diagram illustrating a magnetic flux distribution of an orienting magnetic field in an magnetic alignment molding process.
[Fig. 5] Fig. 5 is a cross-sectional view of an magnetic alignment processing device 100 for supplying the orienting magnetic field.
[Fig. 6] Fig. 6 is a cross-sectional view illustrating a schematic configuration of a DC brush motor 200 according to Embodiment 2.
[Fig. 7] Fig. 7 is an explanatory diagram illustrating the relationship between the positions of teeth, commutators, a brush, and a rectifier coil in the motor according to Embodiment 2, a surface magnetic flux density distribution of an anisotropic bonded magnet, a magnetic flux penetrating the commutators, a voltage induced in the commutators, a distribution of a magnetization vector of the anisotropic bonded magnet, and an magnetic alignment distribution of the anisotropic bonded magnet.
[Fig. 8] Fig. 8 is an explanatory diagram illustrating an magnetic alignment distribution of the anisotropic bonded magnet after magnetic alignment molding according to Embodiment 2.
[Fig. 9] Fig. 9 is an explanatory diagram illustrating a magnetic flux distribution of an aligning magnetic field in an magnetic alignment molding process according to Embodiment 2.
[Fig. 10] Fig. 10 is a cross-sectional view of an magnetic alignment processing device according to Embodiment 2 for supplying the orienting magnetic field.
[Fig. 11] Fig. 11 is a characteristic diagram of cogging torque of the motor according to Embodiment 2.

### Reference Numerals

- 20: DC brush motor
- 10, 15: anisotropic bonded magnet
- 1, 3: N pole on inner-diameter side surface of anisotropic bonded magnet 10
- 2, 4: S pole on inner-diameter side surface of anisotropic bonded magnet 10
- mA: magnetic flux density reduced portion (m=1, 2, 3, 4)
- ma: magnetic flux density minimized portion (m=1, 2, 3, 4)
- 5: brush
- 50: rectifier coil
- 51: rear end portion
- 52: front end portion
- 1A, 1C: magnetic flux density reduced portion
- F: magnetic alignment transition section
- S1: neutral axis
- S2: minimized portion
- M1: neutral axis of magnetic alignment

### Best Modes for Carrying Out the Invention

The present invention will be described below on the basis of specific embodiments.
The embodiments of the present invention, however, are not limited to the individual embodiments described below.

### Embodiment 1

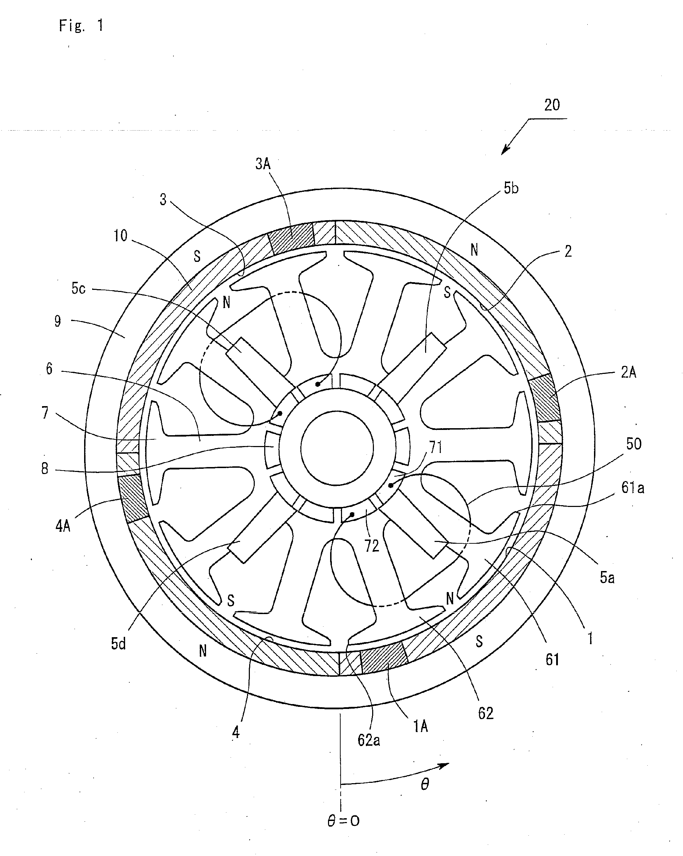

Fig. 1 is a cross-sectional view illustrating a schematic configuration of a DC brush motor 20 (a direct current motor) according to the present Embodiment 1. As illustrated in the present Fig. 1, the DC brush motor 20 includes an integrally-molded ring-shaped four-pole exciting anisotropic bonded magnet 10 having a constant thickness, brushes 5a to 5d, a core 6, commutators 8, coils 50, and a yoke member 9. Further, outer end portions of the individual core 6 are formed with teeth 7. The anisotropic bonded magnet 10 has a hollow cylindrical shape, and is formed on the inner surface thereof with an N magnetic pole 1, an S magnetic pole 2, an N magnetic pole 3, and an S magnetic pole 4. The magnetic poles are formed by magnetization in the direction of the normal of the inner surface of the above-described cylindrical shape facing end surfaces of the teeth 7. In the configuration of Fig. 1, a short circuit caused by the brushes 5b and 5d is cancelled when a short circuit starts in the brushes 5a and 5c, and the short circuit by the brushes 5b and 5d starts when an armature rotates and the short circuit by the brushes 5a and 5c is cancelled. At the timing of Fig. 1, the short circuit starts in the brushes 5a and 5c. Thus, only two rectifier coils 50 short-circuited by the brushes 5a and 5c are illustrated.

Further, each of the magnetic poles 1 to 4 is locally formed with the corresponding one of magnetic flux density reduced portions 1A, 2A, 3A, and 4A in a region equal to or less than the half length of the magnetic pole (equal to or less than π/2 in the electrical angle) as measured from a transmission point of the polarity of the magnetic pole (a neutral axis) in the rotation direction of the armature. Each of the coils is wound in layers around two of the teeth. The magnetic flux density reduced portions 1A, 2A, 3A, and 4A of the same number as the number of the neutral axes of the magnetic poles (the number of the magnetic poles) of the anisotropic bonded magnet 10 are provided. With the above-described settings, it is possible to increase a magnetic flux penetrating the rectifier coil in a rectification section and facilitate the inversion of current to thereby suppress spark discharge.

The DC brush motor 20 according to the present Embodiment 1 is a four-pole direct current motor, in which the above-described anisotropic bonded magnet 10 is disposed on the cylindrical inner surface of a motor housing (the yoke member 9) made of a soft iron such that the magnet surrounds the above-described teeth 7 in proximity and opposite to the teeth. The number of the teeth 7 is ten. The teeth 7 are formed at intervals of a mechanical angle of 36°. That is, adjacent ones of the teeth 7 are formed with the angle formed by the center lines thereof set to 36°. Further, each of intervals between the commutators 8 is set to 36°, approximately 30° of which constitutes an angle facing one of the commutators 8, and the remaining approximately 6° of which constitutes an angle facing an insulator or air present between the commutators. As the brushes 5 are supplied with direct current, the armature formed by the core 6, the commutators 8, and so forth is driven to rotate in the positive direction of a mechanical angle θ in Fig. 1.

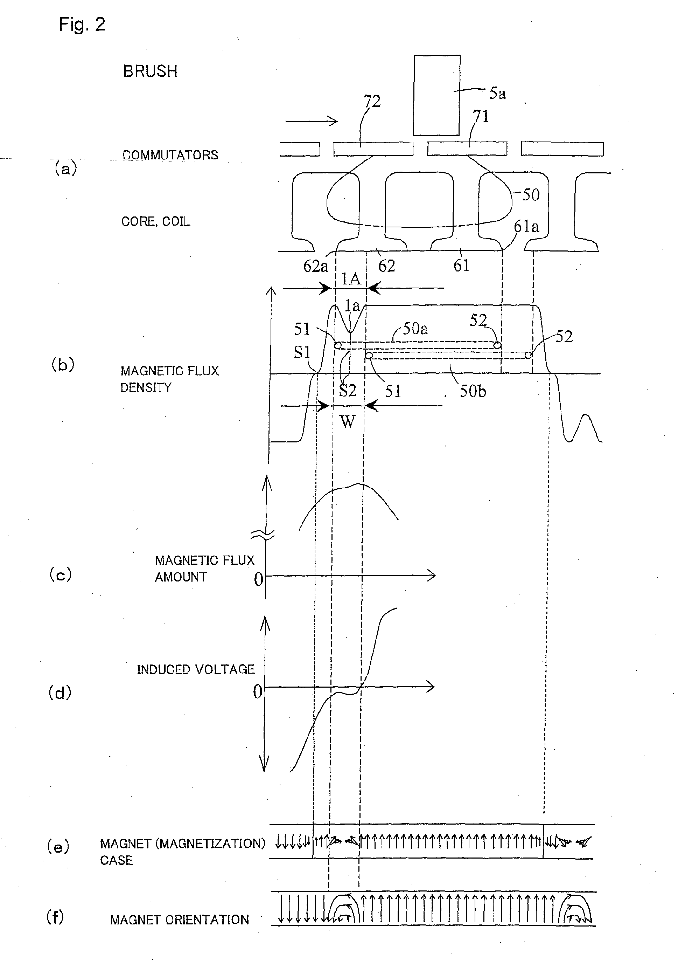

Fig. 2(a) illustrates the positional relationship between the rectifier coil 50, commutators 71 and 72, the brush 5a, and teeth 61 and 62 at the start of the rectification in the section of the magnetic pole 1, i.e., the positional relationship in which the rectifier coil 50 is wound around the teeth 61 and 62, and which is obtained at the timing of short circuit of the commutators 71 and 72 by the brush 5a. The central position (the position at which the magnetic flux density is minimized) S2 of the magnetic flux density reduced portion 1A is located at a position apart from a transition point of the magnetic pole (a neutral axis) S1 by a mechanical angle of 12° or an electrical angle of 4π/30 in the rotation direction. The width of the magnetic flux density reduced portion 1A is set to a mechanical angle of approximately 12° or an electrical angle of approximately 4π/30.

In Fig. 2(b), 50a denotes the position of the rectifier coil 50 at a rectification start position, and 50b denotes the position of the rectifier coil 50 at a rectification end position. With the position of a rear end portion (a coil portion disposed parallel to an armature shaft located in the opposite direction to the rotation direction) 51 of the rectifier coil 50 (the position is defined by the position of a rear end edge portion 62a of the teeth 62 wound with the rear end portion 51) set as a reference, the section in which the rectifier coil 50 moves during the rectification period constitutes a rectification section W. The rectification section W, which of course varies depending on the setting of the reference position of the rectifier coil 50, can be defined as the section in which the rectifier coil moves during the rectification period.

Further, when the rectifier coil 50 moves in the rectification section W, the position of a front end portion (a portion disposed parallel to a shaft located in the rotation direction) 52 of the rectifier coil 50 (the position is defined by the position of a front end edge portion 61a of the teeth 61a wound with the front end portion 52) moves in a main magnetic pole section, and the rear end portion 51 passes the magnetic flux density reduced portion 1A. In this process, the magnetic flux density reduced portion 1A is located outside the rectifier coil 50, and a magnetic flux of a high magnetic flux density continues to be supplied to the rectifier coil 50 from the front end portion 52. Thus, as illustrated in Fig. 2(c), the absolute value of the magnetic flux penetrating the rectifier coil 50 is overall increased. Further, as illustrated in Fig. 2(d), in a voltage e induced in accordance with the increase of the magnetic flux, the back electromotive force is increased in the rectification section W. The magnetic flux penetrating the rectifier coil 50 is increased in the direction of increasing the magnetic flux of the main magnetic pole. Thus, the induced voltage is oriented in the direction of inversion current. Accordingly, inadequate rectification can be compensated for.

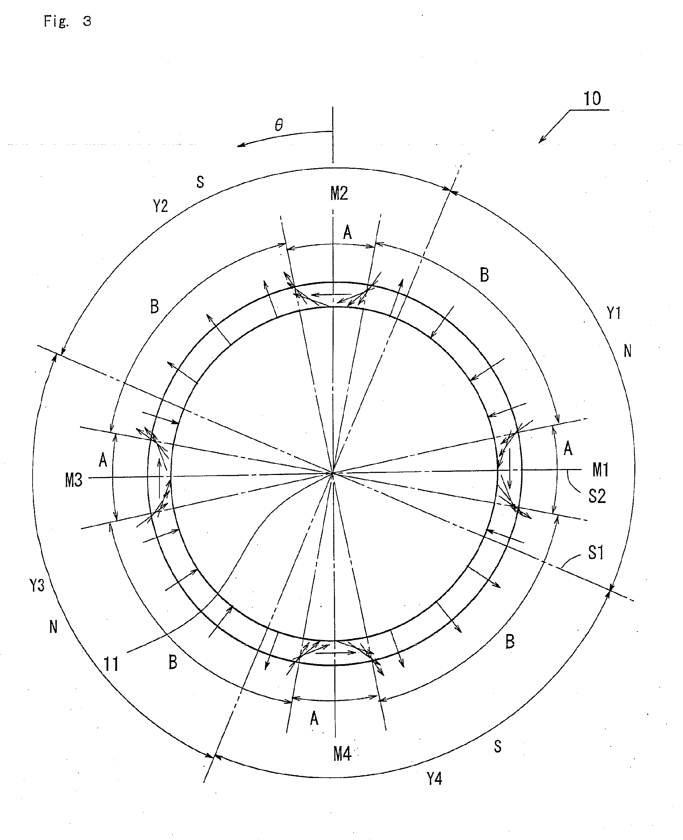

The magnetic alignment of the anisotropic bonded magnet for generating the magnetic flux density distribution as illustrated in Fig. 2(b) is configured as illustrated in Figs. 2(f) and 3. In the magnetic flux density reduced portion 1A, the magnetic alignment mainly includes a component aligned in magnetic field in the rotative direction. In the other magnetic pole portion B, the magnetic alignment is in the direction of the normal. An magnetic alignment transition section A having a width of approximately 12° in the mechanical angle θ' (4π/30 in the electrical angle) constitutes the section in which the orientation of magnetization is gradually inversed. In a main section B, anisotropic rare earth magnetic material powder is aligned in magnetic field in the direction of the normal of the cylindrical side surface. Further, in the magnetic alignment transition section A, the magnetic alignment direction of the anisotropic rare earth magnetic material powder is smoothly inversed along with the transition of the mechanical angle, as illustrated in the drawings. That is, the anisotropic rare earth magnetic material powder has an magnetic alignment distribution in which the powder is gradually aligned in magnetic field in the direction tangent to the rotation of the cylindrical side surface of the magnet as the powder approaches a neutral axis of magnetic alignment Mn (n=1, 2, 3, and 4), in which the powder is aligned in magnetic field in the direction tangent to the rotation of the cylindrical side surface on the neutral axis of magnetic alignment, and in which the powder is gradually aligned in magnetic field in the direction of the normal of the cylindrical side surface as the powder moves away from the neutral axis of magnetic alignment.

Following the above-described magnetic alignment, sections Y1 and Y3 and sections Y2 and Y4 are magnetized to the N pole and the S pole, respectively, such that the central portion S2 of the magnetic flux density reduced portion 1A is located at a position away from the transition point of the magnetic pole (the neutral axis of the magnetic pole) S1 by 12°, as illustrated in Fig. 3. Thereby, the magnetization distribution as illustrated in Fig. 2(e) can be obtained. As a result, a normal component of the magnetic flux density has the distribution as illustrated in Fig. 2(b). The magnetic flux density reduced portion 1A is mainly aligned in magnetic field in the rotative direction. Thus, the magnetic alignment direction becomes perpendicular to an armature reaction magnetic flux, and the demagnetizing action is prevented.

In addition to Nd-Fe-B, a Nd-Fe-B system material, i.e., a material including Nd and a rare earth element other than Nd or another additive element, for example, can be used as the material of the anisotropic rare earth bonded magnet. Further, a material including a rare earth element other than Nd, such as a Sm-Fe-N system material and a SmCo material, for example, or a material mixing the Nd-Fe-B system material with the above-described materials can be used.

In the DC brush motor 20 according to the present Embodiment 1, as specifically illustrated in Figs. 1 and 2, the magnetic flux density reduced portions 1A, 2A, 3A, and 4A are formed on the anisotropic bonded magnet 10 such that, when each of the rectifier coils moves during the rectification period, the magnetic flux extremely rapidly shifts from the position at which the magnetic flux penetrates the rectifier coil to the position at which the magnetic flux does not penetrate the rectifier coil. It is therefore possible to increase the increase rate of the induced voltage with respect to the rotational angle, and thus to facilitate the inversion of current during the rectification period. Accordingly, it is possible to suppress the occurrence of sparks in the DC brush motor 20 according to the present Embodiment 1, and to extend the life of the DC brush motor 20.

Description will be made below of a configuration and a manufacturing procedure of the above-described anisotropic bonded magnet 10 included in the DC brush motor 20.
Fig. 3 illustrates the orientation of magnetization of the respective parts of the above-described anisotropic bonded magnet 10 immediately after an magnetic alignment molding process according to the present invention. That is, Fig. 3 is a transverse cross-sectional view perpendicular to an axis 11 of the anisotropic bonded magnet 10, illustrating the magnetic alignment direction of the anisotropic rare earth magnetic material powder in the anisotropic bonded magnet 10. As the anisotropic bonded magnet 10, a Nd-Fe-B system anisotropic rare earth bonded magnet was used. The anisotropic bonded magnet 10 has a hollow cylindrical shape centering around the axis 11 and having a wall thickness of approximately 1.5 mm.

In the magnetic alignment molding process, heat compression molding was performed in a magnetic field to simultaneously perform magnetic field alignment and compression molding. Further, the conditions for the above heat compression molding in the magnetic field were set such that the mold temperature, the molding pressure, the molding time, and the intensity of the aligning magnetic field in the main section B in the magnetic pole cycle are 120°C, 3.0 t/cm², 15 sec., and 0.80 T, respectively.

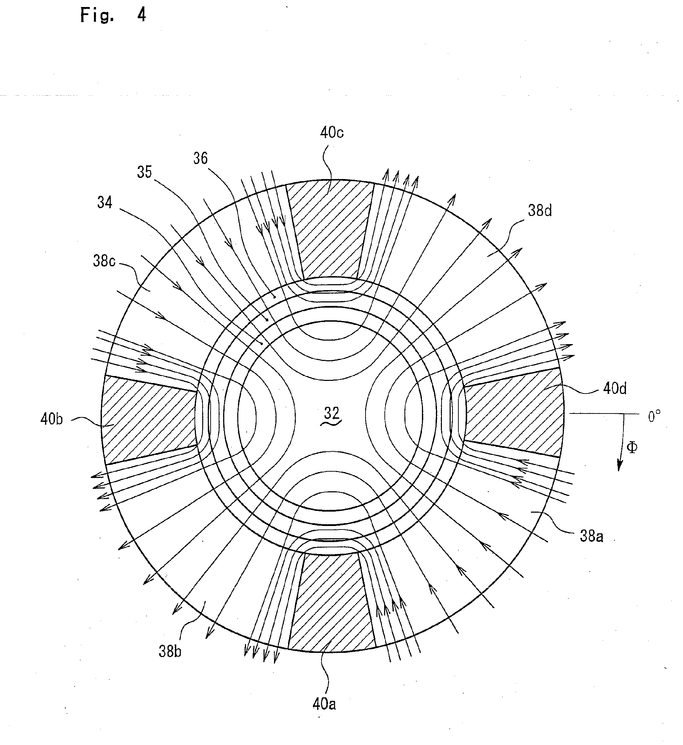

The anisotropic bonded magnet 10 having the magnetic alignment distribution illustrated in Fig. 3 is subjected to the magnetic alignment molding in a cavity 35 of Fig. 4. In this process, the neutral axis of magnetic alignment M1 of Fig. 3 is formed at a position of Φ=0° in Fig. 4. That is, sections of circular-arc second dices 40a, 40b, 40c, and 40d centering around the axis 11 and each having an angle of approximately 12° correspond to the magnetic alignment transition sections A of Fig. 3. Further, sections of first dices 38a, 38b, 38c, and 38d centering around the axis 11 and each having an angle of approximately 78° correspond to the sections B of Fig. 3.

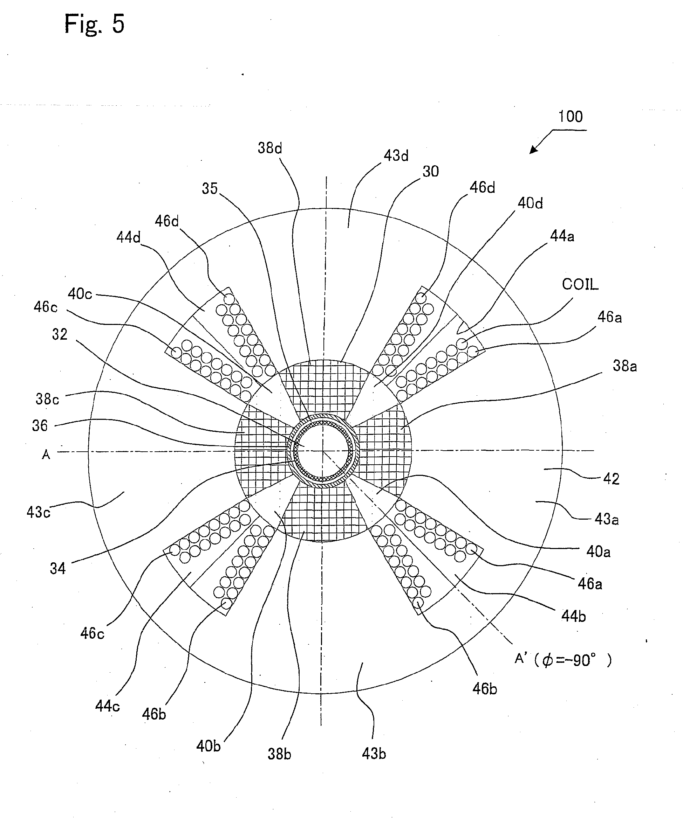

In an magnetic alignment processing device 100 illustrated in Fig. 5, a central portion disposed with the axis 11 of Fig. 3 is provided with a core 32 made of a soft magnetic material, and a cylindrical first ring 34 made of a superhard material and surrounding the core. A second ring 36 made of a superhard material is provided with a certain clearance formed between the ring and the first ring 34. The cavity 35 is formed between the first ring 34 and the second ring 36 to be supplied with the bonded magnet material including magnetic material powder and resin powder.

Outside the second ring 36, the quarter-divided and fan-shaped first dices 38a, 38b, 38c, and 38d formed of a ferromagnetic material and the fan-shaped second dices 40a, 40b, 40c, and 40d formed of a non-magnetic material such as stainless steel and disposed between the first dices are provided. Outside a mold 30, a circular pole piece 42 is disposed. The pole piece 42 includes four sections 43a, 43b, 43c, and 43d, and is formed with spaces 44a, 44b, 44c, and 44d to wind coils between the sections. Adjacent two of the spaces, e.g., the spaces 44a and 44b are wound with a coil 46a such that the section 43a located therebetween is wrapped by the coil.

In the device of the above-described configuration, the magnetic alignment process as illustrated in Fig. 3 can be performed.
After the application of an aligning magnetic field for orienting the magnetic material powder and the compression molding (after the magnetic alignment molding process), the powder is magnetized into the four-pole anisotropic bonded magnet (the magnetization process). Then, in the magnetization process, a soft magnetic yoke was disposed inside the anisotropic bonded magnet 10 as a magnetizing yoke, and another soft magnetic yoke was also disposed outside the magnet. Further, as a magnetizing magnetic field for this process, a pulse magnetic field having an intensity of approximately 4 T was used, and the magnetizing magnetic field was caused to act on the above-described anisotropic bonded magnet 10, which is the target of magnetization, in a similar manner as in the case of the above-described orienting magnetic field.

In the magnetization process, however, the magnetization was performed with the magnetizing magnetic field displaced by approximately 12° from the aligning magnetic field used in the above-described magnetic alignment molding process. That is, the magnetization was performed with the setting in which the neutral axis M1 is disposed at a position of θ≈12° in Fig. 1 after the magnetic alignment molding process, and in which the neutral points M2, M3, and M4 are similarly disposed at positions of θ≈102°, θ≈192°, and θ≈282°, respectively, after the magnetic alignment molding process.

According to the above-described setting, the magnetic flux density minimized portions 1a (in Fig. 2(b) and 2a, 3a, and 4a (illustration omitted)) are respectively formed at the centers of the magnetic alignment transition sections A (the regions disposed in Fig. 3 (the magnetic flux density reduced portions A)) in the magnetic alignment. Thus, desired magnetic flux density minimized portions can be formed more easily and reliably than by the conventional techniques. To the above-described magnetic alignment and magnetization processes, the devices and the methods disclosed in "Magnetic alignment Processing Method of Anisotropic Bonded Magnet for Motor: Japanese Unexamined Patent Application Publication No. 2004-23085" and "Motor and Bonded Magnet for Motor: Japanese Unexamined Patent Application Publication No. 2004-56835," for example, can be applied.

### Embodiment 2

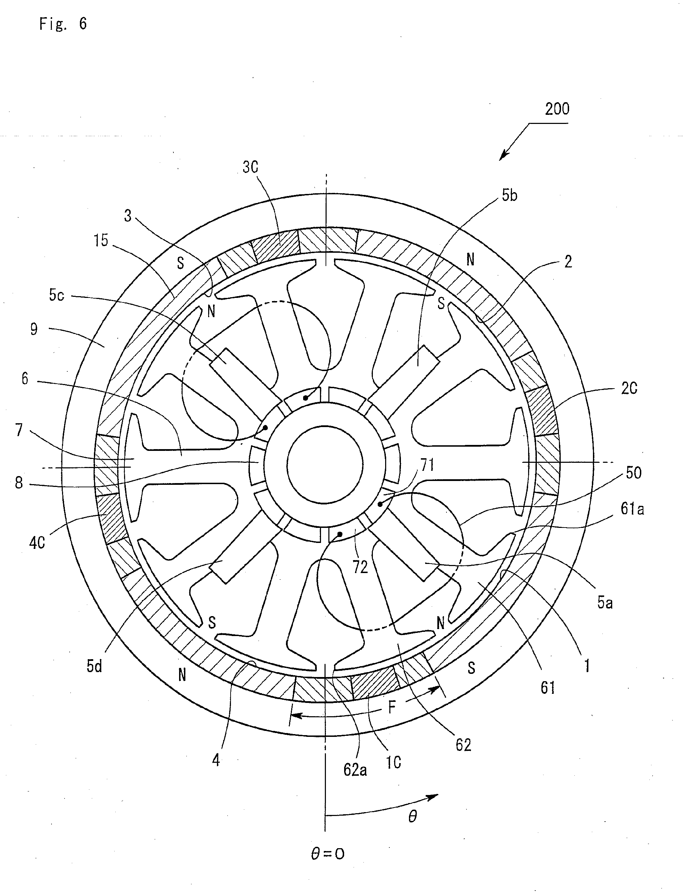

Subsequently, description will be made of Embodiment 2 which generates a different magnetic flux density distribution from the distribution of Embodiment 1. The configuration of a DC brush motor 200 illustrated in Fig. 6 is the same as the configuration of Embodiment 1 except for the magnetic flux density distribution of an anisotropic bonded magnet 15. The same components as the components of Embodiment 1 are assigned with the same reference numerals. The magnetic poles 1 to 4 are formed with magnetic flux density reduced portions 1C, 2C, 3C, and 4C, respectively.

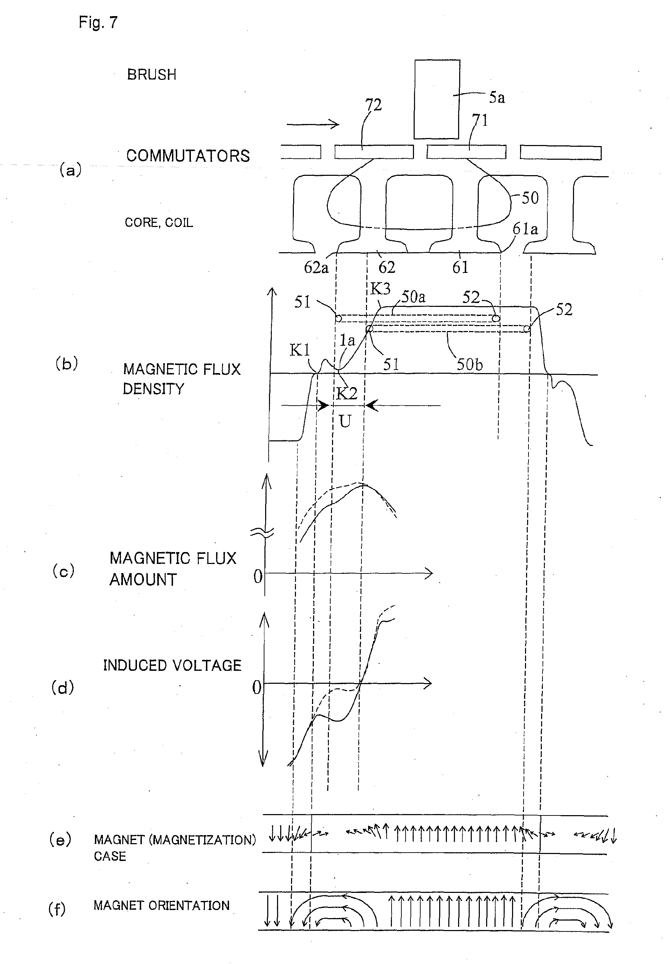

Fig. 7(a) illustrates the positional relationship between the rectifier coil 50, the commutators 71 and 72, the brush 5a, and the teeth 61 and 62 at the start of the rectification in the section of the magnetic pole 1, i.e., the positional relationship in which the rectifier coil 50 is wound around the teeth 61 and 62, and which is obtained at the timing of short circuit of the commutators 71 and 72 by the brush 5a. A minimized position K2 of the magnetic flux density reduced portion 1C is located at a position apart from a transition point of the magnetic pole (a neutral axis) K1 by a mechanical angle of 10° or an electrical angle of π/9 in the rotation direction. The width U of the magnetic flux density reduced portion 1C is set to a mechanical angle of approximately 12° or an electrical angle of approximately 4π/30.

In Fig. 7(b), the rectification start position and the rectification end position of the rectifier coil 50 and the definitions of the rear end portion and the front end portion are the same as the positions and the definitions of Fig. 2(b).
As illustrated in Fig. 7(b), the magnetic flux density distribution includes a magnetic flux density reduced portion U (also constituting a rectification section). In the magnetic flux density reduced portion U, the absolute value of the magnetic flux from the neutral axis K1 of the magnetic pole rises with a delay with respect to the rotation direction of the armature. Specifically, as the magnetic flux density shifts from the neutral axis K1 of the magnetic pole in the rotation direction θ, the magnetic flux density takes a small maximum value and then a minimum value, and is thereafter gradually increased toward a saturation value.

When the rectifier coil 50 moves in the rectification section U, the position of the front end portion 52 of the rectifier coil 50 moves in the main magnetic pole section, and the rear end portion 51 moves in the magnetic flux density reduced portion 1C. In this process, the magnetic flux density reduced portion 1C is located outside the rectifier coil 50, and a magnetic flux of a high magnetic flux density continues to be supplied to the rectifier coil 50 from the front end portion 52. Thus, as indicated by the solid line in Fig. 7(c), the absolute value of the magnetic flux penetrating the rectifier coil 50 is overall increased. Further, as indicated by the solid line in Fig. 7(d), in the voltage e induced in accordance with the increase of the magnetic flux, the back electromotive force is increased in the rectification section U. The magnetic flux penetrating the rectifier coil 50 is increased in the direction of increasing the magnetic flux of the main magnetic pole. Thus, the induced voltage is oriented in the direction of inversion current. Accordingly, inadequate rectification can be compensated for. The broken lines of Figs. 7(c) and 7(d) indicate the magnetic flux amount and the induced voltage of Embodiment 1 illustrated in Figs. 2(c) and 2(d). It is understood that the induced voltage is generated in the rectification section in the direction of inversion current more effectively in Embodiment 2 than in Embodiment 1. Accordingly, the occurrence of sparks can be further effectively prevented.

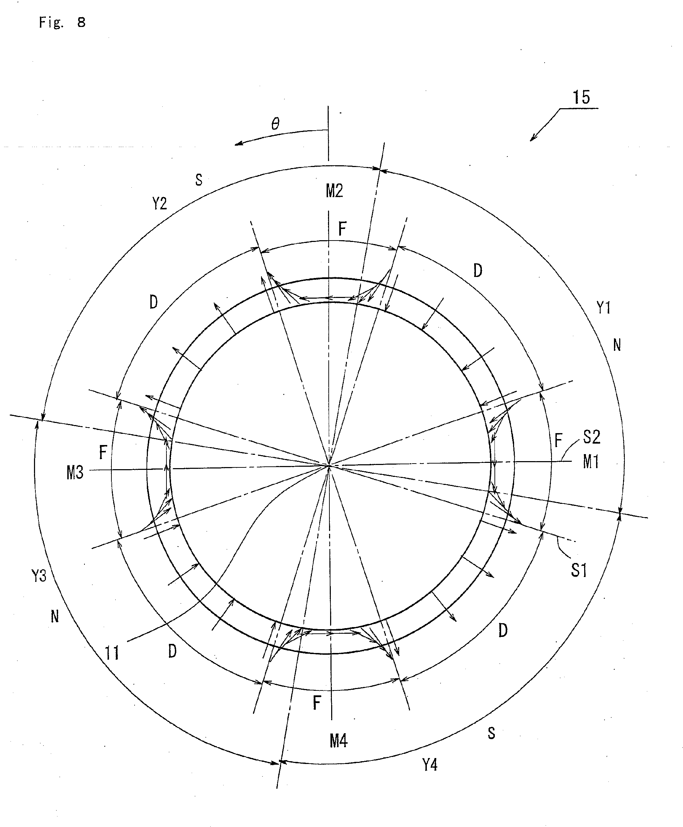

The magnetic alignment of the anisotropic bonded magnet for generating the magnetic flux density distribution as illustrated in Fig. 7(b) is configured as illustrated in Figs. 7(f) and 8. An magnetic alignment transition section F having a width of approximately 36° in the mechanical angle θ (4π/10 in the electrical angle) constitutes the section in which the orientation of magnetization is gradually inversed. In a main section D, the anisotropic rare earth magnetic material powder is aligned in magnetic field in the direction of the normal of the cylindrical side surface. Further, in the magnetic alignment transition section F, the magnetic alignment direction of the anisotropic rare earth magnetic material powder is smoothly inversed along with the transition of the mechanical angle, as illustrated in the drawings. That is, the anisotropic rare earth magnetic material powder has an magnetic alignment distribution in which the powder is gradually aligned in magnetic field in the direction tangent to the rotation of the cylindrical side surface of the magnet as the powder approaches the neutral axis of magnetic alignment Mn (n=1, 2, 3, and 4), in which the powder is aligned in magnetic field in the direction tangent to the rotation of the cylindrical side surface on the neutral axis of magnetic alignment, and in which the powder is gradually aligned in magnetic field in the direction of the normal of the cylindrical side surface as the powder moves away from the neutral axis of magnetic alignment. In the present embodiment, the magnetic flux density reduced portion 1C is included in the magnetic alignment transition section F, and is formed as a part of the magnetic alignment transition section F including the median line of the section.

Following the above-described magnetic alignment, the sections Y1 and Y3 and the sections Y2 and Y4 are magnetized to the N pole and the S pole, respectively, such that the minimal K2 of the magnetic flux density reduced portion 1C, i.e., the median line of the magnetic alignment transition section F is located at a position away from the neutral axis K1 of the magnetic pole by 10°, as illustrated in Fig. 8. Thereby, the magnetization distribution as illustrated in Fig. 7(e) can be obtained. As a result, a normal component of the magnetic flux density has the distribution as illustrated in Fig. 7(b). The magnetic flux density reduced portion 1C is mainly aligned in magnetic field in the rotative direction. Thus, the magnetic alignment direction becomes perpendicular to an armature reaction magnetic flux, and the demagnetizing action is prevented.
In Embodiment 1, the magnetic alignment transition sections A, the magnetic flux density reduced portions 1A to 4A, and the rectification sections W correspond to one another. Meanwhile, Embodiment 2 is characterized in that the magnetic flux density reduced portions 1C to 4C corresponding to the rectification sections U are provided in the magnetic alignment transition sections F.

In the DC brush motor 200 according to the present Embodiment 2, as specifically illustrated in Figs. 6 and 7, the magnetic flux density reduced portions 1C, 2C, 3C, and 4C on the anisotropic bonded magnet 15 are formed such that, when each of the rectifier coils moves during the rectification period, the penetrating magnetic flux rapidly shifts from the position at which the magnetic flux penetrates the rectifier coil to the position at which the magnetic flux does not penetrate the rectifier coil. It is therefore possible to increase the increase rate of the induced voltage with respect to the rotational angle, and thus to facilitate the inversion of current during the rectification period. Accordingly, it is possible to suppress the occurrence of sparks in the DC brush motor 200 according to the present Embodiment 2, and to extend the life of the DC brush motor 200.
Particularly, in the present Embodiment 2, the rise of the magnetic flux density in the magnetic flux density reduced portions 1C, 2C, 3C, and 4C is delayed with respect to the rotational angle of the armature. In the rectification section, therefore, the magnetic flux penetrating the rectifier coil can be reduced at an initial stage and rapidly increased at a terminal stage. As a result, the induced voltage generated in the direction of inversion current is increased, and the occurrence of sparks can be effectively prevented. Further, the variation in magnetization between the magnetic poles becomes smooth. Therefore, the cogging torque is remarkably reduced.

Further, in the above description of Embodiment 2, the rectification section constituting a part of the magnetic alignment transition section F has been defined as the magnetic flux density reduced portion, since it suffices if the magnetic flux density is reduced at least in the section. The magnetic flux density distribution of the magnetic alignment transition section is, however, more reduced than in a case in which the entirety of the magnetic alignment transition section F is magnetized in the radial magnetic alignment. Thus, the magnetic flux density is also reduced in a front section extending from the neutral axis K1 of the magnetic pole to the rectification start position and in a rear section extending from the rectification end position to a position K3 at which the magnetic flux density is saturated. Therefore, the above-described sections are referred to as the magnetic flux density reduced front section and the magnetic flux density reduced rear section. The present invention is characterized in that the magnetic flux density reduced portion in which the magnetic flux density rises with a delay is formed at least in the rectification section.
According to the above-described embodiment, in the magnetic flux density reduced front section, the magnetic flux density shifts from the neutral axis K1 along the rotation direction and takes a small maximum value. Further, in the magnetic flux density reduced rear section, the magnetic flux density is gradually increased toward the saturation value of the magnetic flux density.
The present invention, however, only needs to have the above-described magnetic flux density reduced portion at least in the rectification section. Thus, there is not need for the small maximum value of the magnetic flux density reduced front section as in Embodiment 2. If the section is not magnetized, the occurrence of the maximum value can be prevented. Alternatively, the magnetic flux density reduced front section may be eliminated, or the section may be constituted as a section in which the magnetic flux density takes a sufficiently small value. Further, the magnetic flux density reduced rear section may be eliminated.
Further, it may be configured such that, in the section extending from the neutral axis K1 to the position K3 at which the magnetic flux density is saturated, the magnetic flux density does not have the maximum value and the minimum value but varies with an inflection point. Similarly, in the magnetic flux density reduced portion, the magnetic flux density may not have the minimum value and the maximum value but may form a smoothly increasing curve (which may have an inflection point).
Due to the magnetic flux density reduced portion, the cogging torque can be reduced. Further, due to the presence of the magnetic flux density reduced front section having a small magnetic flux density and the magnetic flux density reduced rear section having a non-saturated magnetic flux density, or due to the magnetic alignment transition section in which the polarity of the magnetic pole is varied after the magnetization, the cogging torque can be further reduced.

A manufacturing procedure of the above-described anisotropic bonded magnet 15 included in the DC brush motor 20 will be described below.

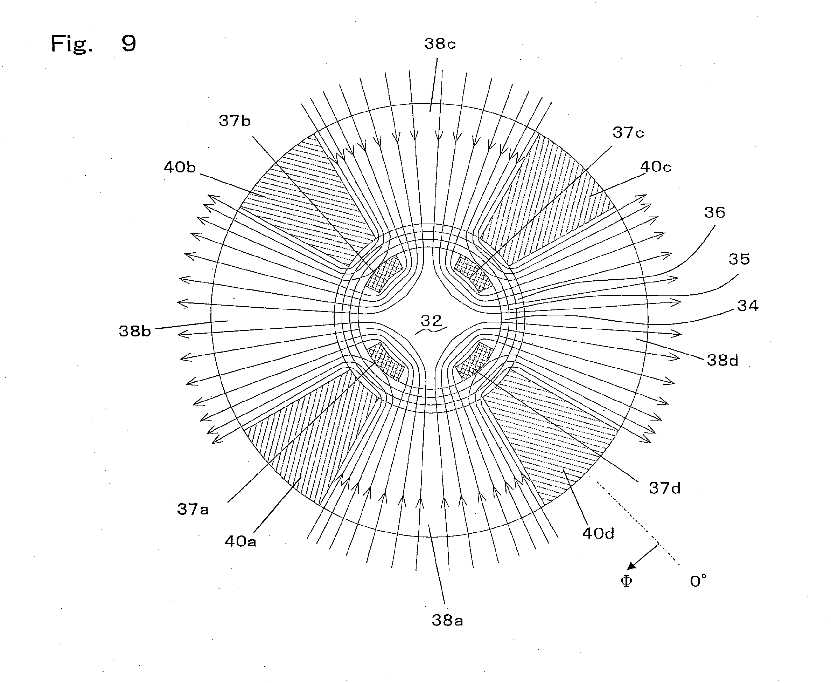

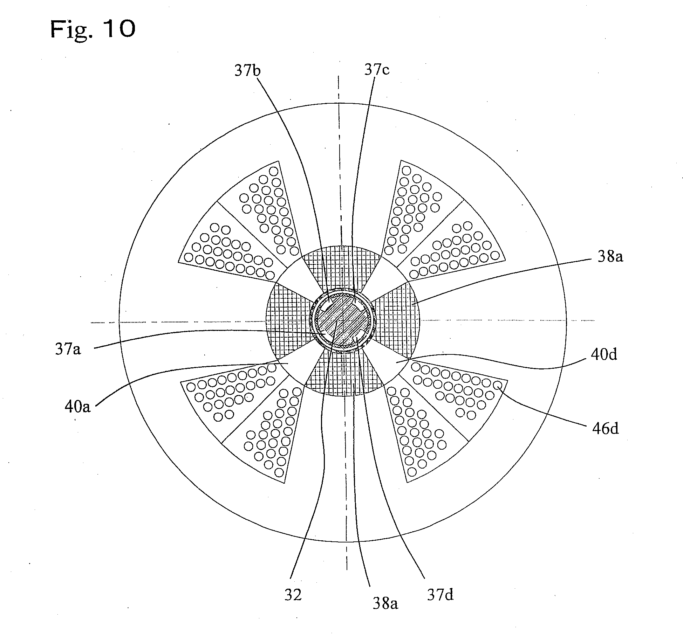

Fig. 9 illustrates an magnetic alignment processing device. In contrast to the manufacturing device of Embodiment 1 in Fig. 4, non-magnetic members 37a, 37b, 37c, and 37d are arranged at positions facing the circular-arc second dices 40a, 40b, 40c, and 40d on a surface portion of the core 32 made of a soft magnetic material. Due to the presence of the non-magnetic members, it is possible to effectively guide a magnetic flux in the rotative direction in the cavity 35, and to increase the width of the magnetic alignment transition section F and extend a portion aligned in magnetic field in the rotative direction. The magnetic alignment processing device of Fig. 10 corresponds to the magnetic alignment processing device of Embodiment 1 in Fig. 5, and is the same in configuration as Embodiment 1 except for the difference in the arrangement of the non-magnetic members 37a, 37b, 37c, and 37d at the positions facing the circular-arc second dices 40a, 40b, 40c, and 40d on the surface portion of the core 32 made of a soft magnetic material.

The anisotropic bonded magnet 15 having the magnetic alignment distribution illustrated in Fig. 8 is subjected to the magnetic alignment molding in the cavity 35 of Fig. 9. In this process, the neutral axis M1 of the magnetic alignment distribution in Fig. 8 is formed at the position of Φ=0° in Fig. 4. That is, sections of the circular-arc second dices 40a, 40b, 40c, and 40d centering around the axis 11 and each having an angle of approximately 36° correspond to the magnetic alignment transition sections F of Fig. 8. Further, sections of the first dices 38a, 38b, 38c, and 38d centering around the axis 11 and each having an angle of approximately 54° correspond to the sections D of Fig. 8.

In the device of the above configuration, the magnetic alignment process as illustrated in Fig. 8 can be performed in a similar manner as in Embodiment 1. Thereafter, the anisotropic bonded magnet 15 is magnetized in a similar manner as in Embodiment 1.
In the magnetization process, however, the magnetization was performed with the magnetizing magnetic field displaced by approximately 10° from the orienting magnetic field used in the above-described magnetic alignment molding process. That is, the magnetization was performed with the setting in which the neutral axis M1 is disposed at a position of θ≈10° in Fig. 6 after the magnetic alignment molding process, and in which the neutral points M2, M3, and M4 are similarly disposed at positions of θ≈100°, θ≈190°, and θ≈280°, respectively, after the magnetic alignment molding process. In this case, the magnetic alignment transition section A is 12° in Embodiment 1. Thus, the entire region of the magnetic alignment transition section A is included in the same magnetic pole, and the range of 6° between the neutral axis of the magnetic pole and an end portion of the magnetic alignment transition section A is aligned in magnetic field in the direction of the normal.
Meanwhile, the magnetic alignment transition section F is 36° in Embodiment 2. Thus, the range of 28° of the magnetic alignment transition section F is included in the magnetic pole section of attention, and the range of remaining 8° is included in the magnetic pole section adjacent in the opposite direction to the rotation direction of the armature.

According to the above-described setting, it is possible to form the magnetic flux density reduced portions 1C, 2C, 3C, and 4C in which the absolute value of the magnetic flux density rises with a delay with respect to the rotational angle of the armature. Further, the magnetic flux density minimized portions 1a (in Fig. 7(b) and 2a, 3a, and 4a (illustration omitted)) can be respectively formed at the centers of the magnetic alignment transition sections F in the magnetic alignment.

The width and the magnetic alignment distribution of the magnetic alignment transition sections F can be easily varied by a variation in the width of the non-magnetic members 37a to 37d and the relative positions of the members with respect to the second dices 40a, 40b, 40c, and 40d in Fig. 9.

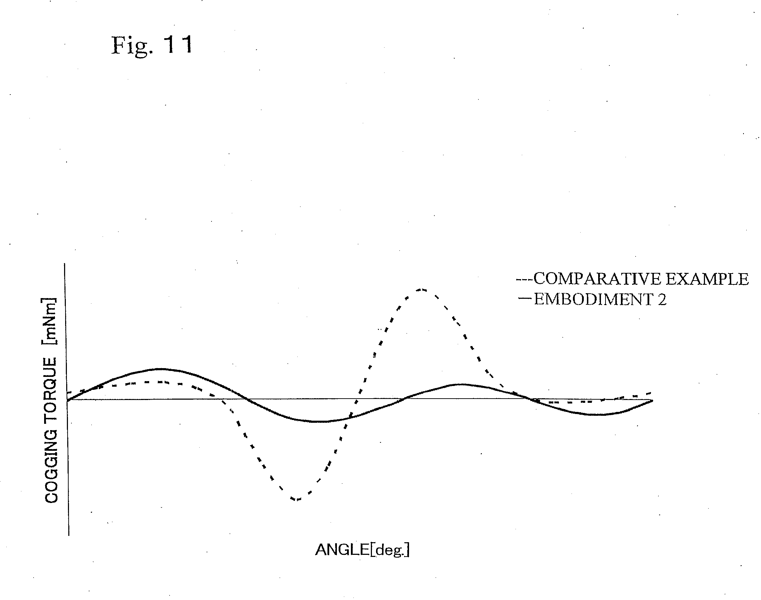

Subsequently, the cogging torque of the present embodiment was measured. The result of the measurement is shown in Fig. 11. Fig. 11 illustrates the variation characteristic of the torque obtained during the period in which the armature was rotated by 18°. The cogging torque of a motor using an anisotropic bonded magnet not including the magnetic flux density reduced portions is shown as a comparative example. It is understood that, if the anisotropic bonded magnet according to Embodiment 2 is used, an obvious reduction in the cogging torque and smooth rotation are achieved. The maximum cogging torque is 23.40 mN·m in the present Embodiment 2 and 92.49 mN·m in the comparative example. Thus, the present embodiment succeeded in reducing the cogging torque of the conventional example to approximately one quarter. Further, in Embodiment 1, the maximum cogging torque is 61.62 mN·m. Thus, the embodiment succeeded in reducing the cogging torque to approximately two thirds. Both in the comparative example and Embodiments 1 and 2, BHmax of the anisotropic bonded magnet is 21 MGOe. The effective magnetic flux is 26.91 kMx in Embodiment 2, 27.56 kMx in the comparative example, and 27.51 kMx in Embodiment 1. A remarkable reduction in the cogging torque was achieved with little reduction in the effective magnetic flux density.

The above-described idea of rectification compensation in a motor can be applied to an electric generator. In such a case, it is necessary that the position in the magnetic pole section formed with the magnetic flux density reduced portion is formed at the position at which, when the rectifier coil moves in the rectification section, the absolute value of the density of the magnetic flux penetrating the rectifier coil is reduced by the influence of the magnetic flux density reduced portion.

Further, to change the rotational speed of the motor, a third brush may be provided to vary the magnetic flux penetrating the coil. To prevent the occurrence of sparks in the third brush, the magnetic flux density reduced portion of the above-described embodiment may be provided in the rectification section for the third brush.

Each of the magnetic flux density distributions of the anisotropic bonded magnets of Embodiments 1 and 2 illustrated in Figs. 2(b) and 7(b) is the magnetic flux density sensed by given teeth when each of the anisotropic bonded magnets is installed to a motor and the armature is rotated. In this case, the clearance between the teeth and the anisotropic bonded magnet is 0.3 to 1 mm and extremely narrow. It is therefore difficult to provide the front surface of the teeth with a magnetic sensing element such as a Hall element. If the surface magnetic flux density distribution of the anisotropic bonded magnet is measured without the installation of the armature, however, the magnetic flux density sensed together with the rotation by the teeth cannot be measured, since the magnetic circuit is different from the circuit of the actual motor. Therefore, instead of the armature, a cylinder made of a soft iron is provided, with the clearance between the anisotropic bonded magnet and a surface of the cylinder set to 3 mm. Further, the surface of the cylinder is provided with a Hall element having a size of 2 mmx2 mm x2 mm. Then, the surface magnetic flux density of the anisotropic bonded magnet is measured while the cylinder is rotated. From the measurement of the magnetic flux density with the use of the anisotropic bonded magnets subjected to the magnetic alignment and the magnetization according to the above-described embodiments, the characteristics of Figs. 2(b) and 7(b) are obtained.

Hereinafter, the following inventions can be recognized in the present specification.
1) A method of manufacturing an anisotropic bonded magnet molded into a ring shape to be used in a brush-equipped direct current motor, the method of manufacturing an anisotropic bonded magnet characterized by including an magnetic alignment molding process of applying an orienting magnetic filed to the material of the anisotropic bonded magnet to mold the anisotropic bonded magnet, and a magnetization process of applying a magnetizing magnetic field to the anisotropic bonded magnet subjected to the magnetic alignment molding by the magnetic alignment molding process to magnetize the anisotropic bonded magnet, wherein perpendicular sections of the number of the poles of the anisotropic bonded magnet, in which the direction of the aligning magnetic field is perpendicular to the direction of the magnetizing magnetic field, are periodically provided on the anisotropic bonded magnet in the rotative direction of the ring shape, to thereby provide each of the perpendicular sections with a magnetic flux density reduced portion in which the magnetic flux density of a component in the direction of the normal of the ring shape is reduced.
2) A method of manufacturing an anisotropic bonded magnet molded into a ring shape to be used in a brush-equipped direct current motor, the method of manufacturing an anisotropic bonded magnet characterized by including an magnetic alignment molding process of applying an orienting magnetic filed to the material of the anisotropic bonded magnet to mold the anisotropic bonded magnet, and a magnetization process of applying a magnetizing magnetic field to the anisotropic bonded magnet subjected to the magnetic alignment molding by the magnetic alignment molding process to magnetize the anisotropic bonded magnet, wherein, in the magnetic alignment molding process, the aligning magnetic field is configured by alternating arrangement in the rotative direction of two types of sections including main sections in which the direction of the magnetic field substantially corresponds to the direction of the normal of the ring shape and magnetic alignment transition sections in which the direction of the magnetic field in the direction of the normal of the ring shape is gradually inverted with respect to a variation in position in the rotative direction of the ring shape, and wherein, in the magnetization process, the magnetic alignment transition sections are disposed in the magnetizing magnetic field such that at least a part of each of the magnetic alignment transition sections is included in the corresponding one of magnetic pole sections corresponding to respective magnetic poles formed by the magnetization processing.

### Industrial Applicability

The present invention can be used in a brush-equipped direct current motor which suppresses the occurrence of sparks.

## Claims

1. An anisotropic bonded magnet molded in a ring shape to be used to excite a brush-equipped direct current motor,
the anisotropic bonded magnet **characterized by** including, in magnetic pole sections of the ring shape, magnetic flux density reduced portions in which the magnetic flux density of a component in the direction of the normal of the ring shape is partially reduced.

2. An anisotropic bonded magnet molded in a ring shape to be used to excite a brush-equipped direct current motor,
the anisotropic bonded magnet **characterized in that** a magnetic flux density distribution in each of magnetic pole sections of the ring shape forms an asymmetric distribution which includes a magnetic flux density reduced portion wherein the absolute value rises from a neutral axis opposite to the rotation direction of an armature with a delay with respect to the rotation direction of the armature, and in which the absolute value falls more rapidly than the rise thereof in the rotation direction of the armature with respect to a neutral axis in the rotation direction of the armature.

3. The anisotropic bonded magnet as described in either one of Claims 1 and 2, **characterized in that** the magnetic flux density reduced portion includes a magnetic flux density minimized portion in which the distribution of the magnetic flux density of a component in the direction of the normal of the ring shape is minimized with respect to a variation in position in the rotative direction of the ring shape.

4. The anisotropic bonded magnet as described in any one of Claims 1 to 3, **characterized in that** the magnetic alignment of the magnetic flux density reduced portion mainly includes a component aligned in magnetic field in the rotative direction of the ring magnet.

5. The anisotropic bonded magnet as described in any one of Claims 1 to 4, **characterized in that** the magnetic alignment of the magnetic flux density reduced portion has a distribution in which, with respect to a variation in position in the rotative direction of the ring magnet, the magnetic flux density reduced portion is gradually aligned in magnetic field from the direction of the normal to the rotative direction and then gradually to the direction of the normal.

6. The anisotropic bonded magnet as described in any one of Claims 1 to 5, **characterized in that** the position in the magnetic pole section formed with the magnetic flux density reduced portion is formed at the position at which, when a rectifier coil moves in a rectification section, the absolute value of the density of a magnetic flux penetrating the rectifier coil is increased due to the influence of the magnetic flux density reduced portion.

7. The anisotropic bonded magnet as described in any one of Claims 1 to 6, **characterized in that**, in a magnetized region including in each of the magnetic pole sections at least a half or more of an magnetic alignment transition section which has an magnetic alignment distribution gradually aligned in magnetic field from the direction of the normal to the rotative direction and then gradually to the direction of the normal with respect to a variation in position in the rotative direction of the ring magnet, a region including at least the median line of the magnetic alignment transition section constitutes the magnetic flux density reduced portion.

8. A brush-equipped direct current motor including the anisotropic bonded magnet as described in any one of Claims 1 to 7.
